# EUROPÄISCHE PATENTSCHRIFT

(11) **EP 1 353 930 B1**
(45) Veröffentlichungstag und Bekanntmachung des Hinweises auf die Patenterteilung: **11.08.2004**
(21) Anmeldenummer: 02708274.2
(22) Anmeldetag: 11.01.2002
(51) Int. Cl.: C07F 9/38

(54) **VERFAHREN ZUR HERSTELLUNG VON N-PHOSPHONOMETHYLIMINODIESSIGSÄURE**
METHOD FOR PRODUCING N-PHOSPHONOMETHYL IMINODIACETIC ACID
PROCEDE POUR PRODUIRE DE L'ACIDE N-PHOSPHONOMETHYLE IMINO DIACETIQUE

(30) Priorität: 12.01.2001 DE 10101293
(43) Veröffentlichungstag der Anmeldung: 22.10.2003
(73) Patentinhaber: BASF AKTIENGESELLSCHAFT, 67056 Ludwigshafen (DE)
(72) Erfinder: MAASE, Matthias, 67346 Speyer (DE); DRÖGEMÜLLER, Michael, 68167 Mannheim (DE)
(74) Vertreter: Kinzebach, Werner, Dr.
(86) Internationale Anmeldenummer: PCT/EP2002/000225
(87) Internationale Veröffentlichungsnummer: WO 2002/055527

(56) Entgegenhaltungen:
- WO-A-00/02888
- WO-A-00/14093
- WO-A-96/40698
- DE-A- 2 914 294
- US-A- 4 724 103

## Beschreibung

Die Erfindung betrifft ein Verfahren zur Herstellung von N-Phosphonomethyliminodiessigsäure (PMIDA) durch Umsetzung eines Alkalimetallsalzes der Iminodiessigsäure (IDA) mit Phosphortrichlorid in wässriger Lösung unter Bildung des Hydrochlorids der Iminodiessigsäure, phosphoriger Säure und des entsprechenden Alkalimetallchlorids und anschliessende Umsetzung mit einer Formaldehydquelle.

PMIDA ist bekanntlich ein Zwischenprodukt zur Herstellung des Totalherbizids N-Phosphonomethylglycin (Glyphosate). Es sind bereits zahlreiche Verfahren zur Herstellung von PMIDA durch Phosphonomethylierung von IDA beschrieben. Ein Teil dieser Verfahren geht von IDA in Form der freien Säure aus. So ist aus der DE 2914294 A die Umsetzung von IDA mit Phosphortrichlorid und Formaldehyd bekannt. Es wird eine relativ hohe Ausbeute erzielt. Das Verfahren hat allerdings den Nachteil, daß ein grosser Überschuss an Phosphortrichlorid und Formaldehyd eingesetzt wird. Die WO 94/15939 beschreibt die Umsetzung von IDA mit phosphoriger Säure und einer Formaldehydquelle in wässriger Lösung in Anwesenheit von konzentrierter Schwefelsäure. Um zufriedenstellende Ausbeuten zu erhalten, erfolgt eine aufwendige Aufarbeitung der bei der Gewinnung von PMIDA anfallenden Filtrate.

Die EP 618212 A (entsprechend der US 5,312,973) beschreibt die Herstellung von PMIDA durch Phosphonomethylierung von IDA mit einer wässrigen Lösung aus Phosphorsäure und Salzsäure, sowie Formaldehyd. Diese wässrige Lösung wird vor der Phosphonomethylierung durch Hydrolyse von Phosphortrichlorid mit Wasser oder Salzsäure hergestellt, wobei die Reaktionstemperatur und die Wassermenge so reguliert werden, daß in der wässrigen Lösung Salzsäure und phosphorige Säure in einem Molverhältnis von 0,5:1 bis 2:1 enthalten sind. Es wird somit mit einem Unterschuss an Salzsäure gearbeitet. Weiter erfolgt die Phosphonomethylierung so, daß IDA und phosphorige Säure in einem Molverhältnis zwischen 1:1 und 1:1,2 vorhanden sind. Dieses aufwendige und umständliche Verfahren ergibt PMIDA in einer Ausbeute von 91 %.

Andere Verfahren gehen aus von einem Alkalimetallsalz, insbesondere dem Dinatriumsalz (DSIDA), der IDA. So beschreibt die WO 96/40698 (entsprechend der US 5,688,994) ein Verfahren zur Herstellung von PMIDA durch gleichzeitiges Einführen einer IDA-Quelle, einer Formaldehydquelle und einer Quelle für phosphorige Säure in das Reaktionsgemisch. Als IDA-Quelle kann ein Alkalimetallsalz oder das Salz einer starken Mineralsäure von IDA oder IDA in Form der freien Säure verwendet werden. Die dabei erzielte Ausbeute von 87 % ist nicht zufriedenstellend.

Die EP 595598 A beschreibt die Herstellung von Hydroximethyliminodiessigsäure durch Umsetzung eines Alkalimetallsalzes der IDA mit einer Formaldehydquelle. Anschliessend erfolgt die Umsetzung der erhaltenen Hydroximethyliminodiessigsäure mit phosphoriger Säure in Gegenwart von Salzsäure. Der Weg über Hydroximethyliminodiessigsäure als Zwischenprodukt wurde gewählt, um eine lagerstabile Ausgangslösung zur Herstellung von PMIDA zu erhalten. Im Gegensatz zu Hydroximethyliminodiessigsäure fällt das Dinatriumsalz der IDA beim Lagern in Form von Kristallen aus und verursacht Schwierigkeiten bei der weiteren Verarbeitung.

Die WO 00/14093 beschreibt ein Verfahren zur Herstellung von PMIDA durch Umsetzung eines Metallsalzes der IDA mit einer zur Bildung von IDA erforderlichen Menge einer Mineralsäure, Zugabe einer Quelle für phosphorige Säure, um eine Lösung des Phosphitsalzes der IDA zu erhalten,Abtrennung des im Reaktionsgemisch enthaltenen Metallsalzes der zur Bildung der IDA verwendeten starken Mineralsäure aus der Lösung des Phosphitsalzes der Iminodiessigsäure und Phosphonomethylierung des Phosphitsalzes mit einer Quelle für phosphorige Säure und einer Formaldehydquelle in Anwesenheit einer starken Mineralsäure. '
Dieses Verfahren ergibt zwar eine relativ hohe Ausbeute, es ist aber aufwendig, weil es zwei zusätzliche Reaktionsschritte umfasst, nämlich die Bildung des Phosphitsalzes der IDA, und die Abtrennung des erwähnten Metallsalzes. Ein ähnliches Verfahren ist in der WO 00/22888 beschrieben.

Schließlich beschreibt die EP 155926 A (entsprechend den US 4,724,103 u. 4,775,498) ein Verfahren zur Herstellung von PMIDA durch Umsetzung eines Alkalimetallsalzes der IDA mit einer starken Mineralsäure unter Bildung des Mineralsäuresalzes der IDA, und anschliessende Phosphonomethylierung mit Formaldehyd und phosphoriger Säure. Phosphorige Säure und Salzsäure, als starke Mineralsäure, können durch Hydrolyse von Phosphortrichlorid bereitgestellt werden. Nach der Phosphonomethylierung wird wässrige NaOH zum Reaktionsgemisch gegeben, um das im Reaktionsgemisch vorhandene Alkalimetallsalz der starken Mineralsäure aufzulösen, so daß PMIDA als Präzipitat gewonnen werden kann. Die mit diesem Verfahren erzielte Ausbeute ist nicht zufriedenstellend.

Die DE 19909200 beschreibt ein Verfahren zur Herstellung von PMIDA durch Umsetzung von IDA mit phosphoriger Säure und Formaldehyd in wässriger Lösung in Gegenwart einer starken Mineralsäure. Die Umsetzung wird bei einer Temperatur von 110-150° C und unter Schutzgasatmosphäre durchgeführt.

Weitere Verfahren zur Herstellung von PMIDA sind in der GB 2154588 A und US 3,288,846 beschrieben.

Den im Stand der Technik beschriebenen Verfahren ist gemeinsam, daß sie aufwendig sind, beispielsweise weil sie zusätzliche Reaktionsschritte umfassen, wie die Neutralisation des Alkalimetallsalzes der IDA, und/oder die Ausbeuten zu wünschen übrig lassen.

Der vorliegenden Erfindung liegt daher die Aufgabe zugrunde, ein Verfahren zur Verfügung zu stellen, das auf einfache Weise und mit hoher Ausbeute PMIDA ergibt.

Überraschenderweise wurde nun gefunden, daß diese Aufgabe gelöst wird, wenn man während und/oder nach der Umsetzung eines Alkalimetallsalzes der IDA mit Phosphortrichlorid Wasser, das gegebenenfalls HCl enthält, aus dem Reaktionsgemisch entfernt, bis eine IDA·HCl-Konzentration von mindestens 44 Gew.-% vorliegt.

Die Erfindung betrifft daher ein Verfahren zur Herstelllung von N-Phosphonomethyliminodiessigsäure durch Umsetzung eines Alkalimetallsalzes der Iminodiessigsäure mit Phosphortrichlorid in wässriger Lösung unter Bildung des Hydrochlorids der Iminodiessigsäure, phosphoriger Säure und des entsprechenden Alkalimetallchlorids, und anschliessende Umsetzung des Reaktionsproduktes mit einer Formaldehydquelle, wobei man während und/oder nach der Umsetzung des Alkalimetallsalzes der IDA mit Phosphortrichlorid Wasser, das gegebenenfalls HCl enthält, aus dem Reaktionsgemisch entfernt, bis eine Konzentration an Iminodiessigsäure-Hydrochlorid von mindestens 44 Gew.-%, bezogen auf das Gewicht des Reaktionsgemisches abzüglich des Gewichtes an Alkalimetallchlorid, vorliegt, und gewünschtenfalls die N-Phosphonomethyliminodiessigsäure aus dem Reaktionsgemisch gewinnt.

Das erfindungsgemässe Verfahren lässt sich durch folgende Reaktionsgleichung veranschaulichen, wobei als Alkalimetallsalz der IDA das Dinatriumsalz gewählt wurde:

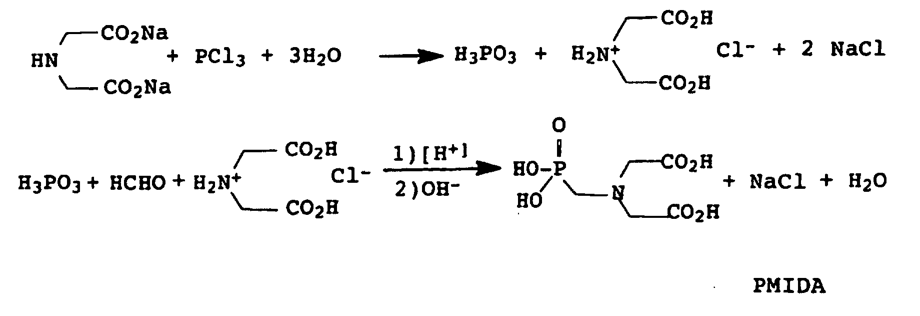

Als Alkalimetallsalz der IDA verwendet man insbesondere das Dinatrium- und Dikaliumsalz. Die Salze der Iminodiessigsäure werden üblicherweise durch Hydrolyse von Iminodiacetonitril hergestellt. Das erhaltene Hydrolisat kann als Ausgangsmaterial für das erfindungsgemässe Verfahren eingesetzt werden. Alternativ kann auch ein aus anderen Quellen stammendes Salz eingesetzt werden. Besonders bevorzugt ist es, das Alkalimetallsalz der IDA in einer Reinheit von mindestens 90 % einzusetzen.

Das Alkalimetallsalz der IDA kommt in wässriger Lösung im allgemeinen in einer Konzentration von 30 bis 50 Gew.-%, insbesondere 35 bis 45 Gew.-%, zur Anwendung.

Zu der wässrigen Lösung des Alkalimetallsalzes der IDA wird Phosphortrichlorid gegeben. Das Phosphortrichlorid hydrolisiert unter Bildung von phosphoriger Säure und HCl, die mit dem Alkalimetallsalz der IDA unter Bildung des Hydrochlorids der IDA und des entsprechenden Alkalimetallchlorids reagiert. Das Phosphortrichlorid wird vorzugsweise in einer Menge von etwa 1 bis 1,2 Moläquivalenten (bezogen auf das Alkalimetallsalz der IDA) verwendet. Bei Anwendung von mehr als einem Moläquivalent bildet sich überschüssiges HCl, das in der wässrigen Phase gelöst bleibt.

Während und/oder nach der Umsetzung des Alkalimetallsalzes der IDA mit Phosphortrichlorid wird Wasser aus dem Reaktionsgemisch, insbesondere durch Destillation bei Normaldruck oder verringertem Druck (etwa 0,1 bis 0,8 bar), entfernt. Bei Verwendung von mehr als einem Moläquivalent Phosphortrichlorid enthält das aus dem Reaktionsgemisch entfernte Wasser HCl. Die Entfernung des Wassers erfolgt vorzugsweise unter Ausnutzung der Reaktionswärme der Umsetzung von Phosphortrichlorid mit Wasser. Diese Umsetzung ist stark exotherm, und die freiwerdende Reaktionswärme reicht aus, um das Reaktionsgemisch (bei Normaldruck) am Sieden zu halten und die gewünschte Menge Wasser durch Destillieren zu entfernen. Alternativ kann man zumindest einen Teil des Wassers durch Abdestillieren nach der Hydrolyse entfernen.

Da die anschliessende Phosphonomethylierung in Anwesenheit von Säure erfolgt, kann nach Entfernen des Wassers eine starke Mineralsäure, insbesondere Salzsäure, zugegeben werden. Zweckmässigerweise verwendet man eine höher konzentrierte Säure, z. B. ≥ 20 gew.-%ige Salzsäure, insbesondere konzentrierte (30-37 gew.-%ige) Salzsäure. Vorzugsweise beträgt die Salzsäurekonzentration im Reaktionsgemisch vor Umsetzung mit der Formaldehydquelle 5 bis 20 Gew.-%, bezogen auf die Gewichtsmenge an Wasser im Reaktionsgemisch.

Erfindungsgemäss wird so viel Wasser entfernt, daß die Kpnzentration an IDA.HCl im Reaktionsgemisch vor der Phosphonomethylierung mindestens 40 Gew.-% beträgt, bezogen auf das Gewicht des Reaktionsgemisches abzüglich des Gewichtes an Alkalimetallchlorid. Vorzugsweise liegt die Konzentration an IDA·HCl im Bereich von 44 bis 55 Gew.-%.

Die Phosphonomethylierung erfolgt durch Umsetzung von IDA·HCl mit phosphoriger Säure und einer Formaldehydquelle in Anwesenheit von Säure. Die Säure dient dazu, die Bildung von N-Methyliminodiessigsäure als Nebenprodukt zu minimieren.

Als Formaldehydquelle dient insbesondere eine wässrige Formaldehydlösung in einer Konzentration von 30 bis 50 Gew.-%. Alternativ kann Paraformaldehyd verwendet werden. Vorzugsweise verwendet man etwa 1,1 bis 1,5 Moläquivalente Formaldehyd. Als besonders bevorzugt hat es sich erwiesen, wenn man Phosphortrichlorid in im Wesentlichen äquimolaren Mengen und die Formaldehydquelle in einer Menge verwendet, daß etwa 1,3 bis 1,45 Moläquivalente Formaldehyd zur Verfügung stehen.

Die Reaktionstemperatur liegt im allgemeinen im Bereich von etwa 85° C bis etwa 180° C, vorzugsweise etwa 105 bis etwa 145° C, und insbesondere etwa 125 bis etwa 145° C. Die Umsetzung kann unter Atmosphärendruck oder unter leichtem Überdruck, beispielsweise etwa 1,1 - 3 bar, und an Luft oder unter Schutzgas durchgeführt werden.

Als besonders vorteilhaft hat es sich erwiesen, die Formaldehydquelle in zwei Teilen zuzugeben. Zunächst wird die Hauptmenge, insbesondere 60 bis 90 Gew.-%, und vorzugsweise 75 bis 85 Gew.-%, zugegeben, während der Rest nach etwa einer Stunde Reaktionszeit zugegeben wird. Die gesamte Reaktionszeit beträgt im allgemeinen 1,5 bis 5 Stunden, insbesondere 2 bis 3 Stunden. Nach der Phosphonomethylierung liegt eine Suspension vor. Um PMIDA auszufällen und das suspendierte Alkalimetallchlorid in Lösung zu bringen, wird wässrige NaOH zugegeben, bis das Alkalimetallchlorid gelöst vorliegt. Zur Ausfällung von PMIDA wird zu der Lösung eine Base bis max. dem isoelektrischen Punkt (pH 1,3) gegeben. Vorzugsweise stellt man den pH jedoch auf einen Wert unterhalb des isoelektrischen Punktes, insbesondere auf einen Wert im Bereich von 0 bis 1, bevorzugt 0,5 bis 0,8, ein. Überraschenderweise hat sich gezeigt, daß die Löslichkeit von PMIDA unterhalb des isoelektrischen Punktes geringer ist, so daß dadurch die Ausbeute erhöht wird.

Als Base verwendet man ein Alkali- oder Erdalkalihydroxid, vorzugsweise Natriumhydroxid, insbesondere 15-25 Gew.-%ige Natronlauge. Um möglichst hohe Ausbeuten zu erhalten, führt man die Einstellung des pH-Wertes und/oder die Kristallisation bei möglichst niedriger Temperatur durch, beispielsweise bei einer Temperatur im Bereich von 5° C bis 20° C.

Die Gewinnung der ausgeschiedenen PMIDA erfolgt in üblicher Weise, beispielsweise durch Filtration. Gewünschtenfalls wird der Filterkuchen mit Wasser gewaschen.

Trotz der oben erwähnten pH-Einstellung und niedriger Temperatur bei Fällung und Kristallisation bleibt ein geringer Teil des PMIDA in der Mutterlauge und dem Waschwasser gelöst. Die Gewinnung dieses restlichen PMIDA's kann in üblicher Weise erfolgen, beispielsweise durch Eindampfen der Mutterlauge und des Waschwassers.

Das erfindungsgemässe Verfahren kann kontinuierlich, halbkontinuierlich oder diskontinuierlich in üblichen Reaktoren durchgeführt werden. Gewünschtenfalls kann das Verfahren unter Schutzgasatmosphäre, z. B. unter Stickstoff oder Argon, durchgeführt werden.

Das erfindungsgemässe Verfahren hat den Vorteil, daß sich PMIDA auf einfache Weise und in hoher Ausbeute herstellen lässt. Trotzdem werden die Edukte nur in geringem molarem Überschuss eingesetzt. Die Edukte können in hoher Konzentration eingesetzt werden, und trotz der konzentrierten Fahrweise bleibt die bei der Umsetzung des Alkalimetallsalzes der IDA mit Phosphortrichlorid gebildete Suspension gut handhabbar.

Die nachfolgenden Beispiele erläutern die Erfindung, ohne sie zu begrenzen.

### Beispiel 1

In einem 1,6-1-Reaktor mit Turbinenrührer (950 U/min) und Stromstörer werden 554 g Wasser vorgelegt. Unter Rühren werden zunächst 203 g NaOH (5,08 mol) und dann 338 g IDA (2,54 mol) zugegeben und zum Rückfluss erhitzt, wobei eine klare Lösung (Dinatriumsalz der Iminodiessigsäure) entsteht. Diese entspricht 1095 g einer 41 %-igen Lösung aus DSIDA in Wasser. Durch ein sich an der Spitze verjüngendes und unter die Oberfläche des Reaktionsgemischs ragendes Glasrohr werden bei Rückfluss 348 g (2,54 mol) PCl₃ innerhalb einer Stunde zugegeben. Das refluxierende Gemisch wird in einen 1,6-1-Rührkessel mit Impellerrührer (950 U/ min) und Strömungsstörer gepumpt und mit 50 g H₂O nachgespült. Von dem Reaktionsgemisch werden 411 g einer 2,8%-igen HCl abdestilliert. Anschliessend werden 194 g 37%-ige HCl in die Reaktionsmischung gegeben und innerhalb einer Stunde 216 g 49%-iges Formalin (3,55 mol) unter die Oberfläche des Reaktionsgemisches und unter Rückfluss zudosiert. Anschliessend rührt man zwei Stunden unter Rückfluss nach und überführt den Reaktorinhalt in einen auf 10 °C Manteltemperatur vorgekühlten 2-1-Reaktor mit dreistufigem Kreuzbalkenrührer (330 U/min). Wenn die Suspension auf 26°C abgekühlt ist, werden innerhalb 25 min 627 g 20%-ige NaOH (3,73 mol) unter die Oberfläche des Reaktionsgemisches zudosiert, so daß der pH = 0,8 beträgt. Die Suspension wird in einen 2-1-Reaktor mit Ankerrührer (220 U/min) gepumpt und bei 15°C eine Stunde nachgerührt. Man filtriert die Suspension über eine Glasfilternutsche und wäscht mit 250 g H₂O. Die restfeuchte PMIDA wird im Vakuumtrockenschrank bei 80°C und 50 mbar getrocknet. Der Feststoff-holdup in den Reaktoren wird durch Spülen mit 3320 g 1,5%-iger NaOH isoliert. Der PMIDA-Gehalt im PMIDA-Kristallisat, in der Spüllösung, der Mutterlauge und dem Waschwasser wird mittels HPLC bestimmt. Insgesamt werden 541 g (2,38 mol) PMIDA erhalten, was einer Gesamtausbeute von 94 % entspricht. Davon sind 4 g PMIDA in der Mutterlauge und 1 g PMIDA im Waschwasser enthalten. Die Gesamtausbeute abzüglich der PMIDA-Verluste in Mutterlauge und Waschwasser werden als die isolierte Ausbeute definiert. Sie beträgt 93 %.

Die nachfolgenden Beispiele 2 bis 5 wurden in entsprechender Weise durchgeführt, wobei jedoch unterschiedliche Mengen an Edukten und unterschiedliche Konzentrationen zur Anwendung kamen. Die erhaltenen Ergebnisse sind in der nachfolgenden Tabelle zusammengestellt.

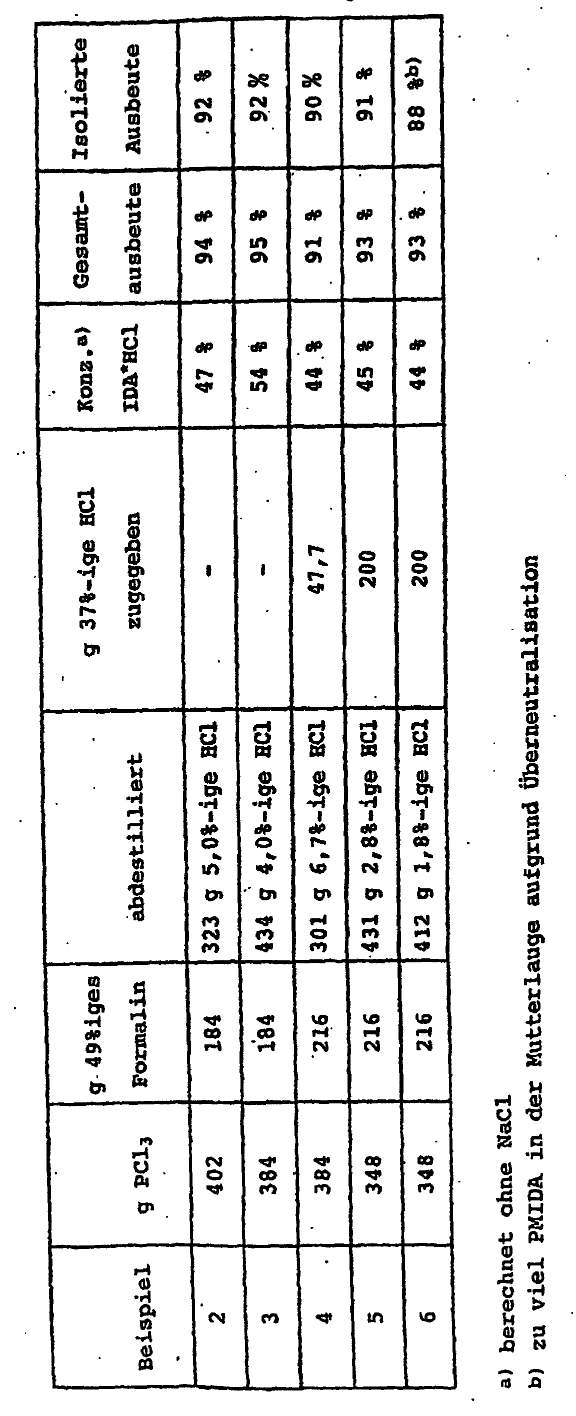

## Patentansprüche

1. Verfahren zur Herstellung von N-Phosphonomethyliminodiessigsäure durch Umsetzung eines Alkalimetallsalzes der Iminodiessigsäure mit Phosphortrichlorid in wässriger Lösung unter Bildung des Hydrochlorids der Iminodiessigsäure, phosphoriger Säure und des entsprechenden Alkalimetallchlorids, anschliessende Umsetzung mit einer Formaldehydquelle und gewünschtenfalls Gewinnung der N-Phosphonomethyliminodiessigsäure aus dem Reaktionsgemisch, **dadurch gekennzeichnet, daß** man während der Umsetzung des Alkalimetallsalzes der Iminodiessigsäure mit Phosphortrichlorid Wasser, das gegebenenfalls HCl enthält, aus dem Reaktionsgemisch entfernt, bis eine Konzentration an Iminodiessigsäure-Hydrochlorid im Bereich von 44 bis 55 Gew.-%, bezogen auf das Gewicht des Reaktionsgemisches abzüglich des Gewichts an Alkalimetallchlorid, vorliegt.

2. Verfahren nach Anspruch 1, **dadurch gekennzeichnet, daß** man die Menge an HCl im Reaktionsgemisch vor der Umsetzung mit der Formaldehydquelle auf 5 bis 20 Gew.-%, bezogen auf die Gewichtsmenge an Wasser im Reaktionsgemisch, einstellt.

3. Verfahren nach einem der vorhergehenden Ansprüche, **dadurch gekennzeichnet, daß** man etwa 1.0 bis 1.2 Moläquivalente Phosphortrichlorid verwendet.

4. Verfahren nach einem der vorhergehenden Ansprüche, **dadurch gekennzeichnet, daß** man die Formaldehydquelle in einer Menge einsetzt, daß 1,0 bis 1,5 Moläquivalente Formaldehyd zur Verfügung stehen.

5. Verfahren nach Anspruch 4, **dadurch gekennzeichnet, daß** man die Formaldehydquelle in einer Menge verwendet, daß 1,3 bis 1,45 Moläquivalente Formaldehyd zur Verfügung stehen.

6. Verfahren nach einem der vorhergehenden Ansprüche, **dadurch gekennzeichnet, daß** man zur Gewinnung der N-Phosphonomethyliminodiessigsäure den pH-Wert des Reaktionsgemisches durch Zugabe einer Base auf maximal 1,3 einstellt.

7. Verfahren nach Anspruch 6, **dadurch gekennzeichnet, daß** man den pH-Wert auf 0 bis 0,8 einstellt.

8. Verfahren nach Anspruch 6 oder 7, **dadurch gekennzeichnet, daß** man als Base 5 bis 25 gew.-%ige Natronlauge verwendet.

## Claims

1. A process for the preparation of N-phosphonomethyliminodiacetic acid by reacting an alkali metal salt of iminodiacetic acid with phosphorus trichloride in aqueous solution with formation of the hydrochloride of iminodiacetic acid, phosphorous acid and of the corresponding alkali metal chloride, followed by reaction with a formaldehyde source and, if desired, recovery of the N-phosphonomethyliminodiacetic acid from the reaction mixture, **characterized in that** water, which may comprise HCl, is removed from the reaction mixture during reacting the alkali metal salt of iminodiacetic acid with phosphorus trichloride until the concentration of iminodiacetic acid hydrochloride is 44 to 55% by weight, based on the weight of the reaction mixture minus the weight of alkali metal chloride.

2. A process as claimed in claim 1, **characterized in that** the amount of HCl in the reaction mixture before the reaction with the formaldehyde source is brought to 5 to 20% by weight, based on the amount by weight of water in the reaction mixture.

3. A process as claimed in any of the preceding claims, **characterized in that** approximately 1.0 to 1.2 molar equivalents of phosphorus trichloride are used.

4. A process as claimed in any of the preceding claims, **characterized in that** the formaldehyde source is employed in such an amount that 1.0 to 1.5 molar equivalents of formaldehyde are available.

5. A process as claimed in claim 4, **characterized in that** the formaldehyde source is used in such an amount that 1.3 to 1.45 molar equivalents of formaldehyde are available.

6. A process as claimed in any of the preceding claims, **characterized in that**, to recover the N-phosphonomethyliminodiacetic acid, the pH of the reaction mixture is brought to not more than 1.3 by adding a base.

7. A process as claimed in claim 6, **characterized in that** the pH is brought to 0 to 0.8.

8. A process as claimed in claim 6 or 7, **characterized in that** 5 to 25% by weight strength sodium hydroxide solution is used as the base.

## Revendications

1. Procédé de préparation d'acide N-phosphonométhyliminodiacétique par réaction d'un sel de métal alcalin de l'acide iminodiacétique avec du trichlorure de phosphore en solution aqueuse avec formation du chlorhydrate de l'acide iminodiacétique, de l'acide phosphoreux et du chlorure de métal alcalin correspondant, puis par réaction avec une source de formaldéhyde et si on le désire obtention de l'acide N-phosphonométhyliminodiacétique à partir du mélange réactionnel, **caractérisé en ce que**, au cours de la réaction du sel de métal alcalin de l'acide iminodiacétique avec le trichlorure de phosphore, on retire du mélange réactionnel l'eau qui contient le cas échéant de l'HCl, jusqu'à ce qu'il y ait une concentration en chlorhydrate de l'acide iminodiacétique comprise entre 44 et 55% en poids, par rapport au poids du mélange réactionnel, déduction faite du poids du chlorure de métal alcalin.

2. Procédé selon la revendication 1, **caractérisé en ce qu'**on règle la quantité d'HCl dans le mélange réactionnel avant la réaction avec la source de formaldéhyde, à 5 à 20% en poids, par rapport à la quantité pondérale d'eau dans le mélange réactionnel.

3. Procédé selon l'une des revendications précédentes, **caractérisé en ce qu'**on utilise d'environ 1,0 à 1,2 équivalents molaires de trichlorure de phosphore.

4. Procédé selon l'une des revendications précédentes, **caractérisé en ce qu'**on utilise la source de formaldéhyde en une quantité telle que l'on dispose de 1,0 à 1,5 équivalent molaire de formaldéhyde.

5. Procédé selon la revendication 4, **caractérisé en ce qu'**on utilise la source de formaldéhyde en une quantité telle que l'on dispose de 1,3 à 1,45 équivalent molaire de formaldéhyde.

6. Procédé selon l'une des revendications précédentes, **caractérisé en ce que**, pour l'obtention de l'acide N-phosphonométhyliminodiacétique, on règle le pH du mélange réactionnel à 1,3 au maximum par addition d'une base.

7. Procédé selon la revendication 6, **caractérisé en ce qu'**on règle le pH entre 0 et 0,8.

8. Procédé selon la revendication 6 ou 7, **caractérisé en ce qu'**on utilise comme base la lessive de soude à 5 à 25% en poids.
